(19)

Europäisches
Patentamt
European
Patent Office
Office européen
des brevets

(11) **EP 4 621 979 A1**

(12) **EUROPEAN PATENT APPLICATION**
published in accordance with Art. 153(4) EPC

(43) Date of publication:
24.09.2025 Bulletin 2025/39

(21) Application number: 22968970.8

(22) Date of filing: 23.12.2022

(51) International Patent Classification (IPC):
*H01M 50/533* (2021.01)   *H01M 50/531* (2021.01)
*H01M 10/04* (2006.01)

(52) Cooperative Patent Classification (CPC):
H01M 10/04; H01M 50/531; H01M 50/533

(86) International application number:
PCT/CN2022/141246

(87) International publication number:
WO 2024/130675 (27.06.2024 Gazette 2024/26)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Contemporary Amperex Technology**
**(Hong Kong) Limited**
**Hong Kong (HK)**

(72) Inventor: **DU, Xianglong**
**Ningde, Fujian 352100 (CN)**

(74) Representative: **Thoma, Michael**
**Lorenz Seidler Gossel**
**Rechtsanwälte Patentanwälte**
**Partnerschaft mbB**
**Widenmayerstraße 23**
**80538 München (DE)**

(54) **BATTERY CELL, BATTERY, ELECTRICAL DEVICE, AND METHOD AND APPARATUS FOR MANUFACTURING BATTERY CELL**

(57)     This application provides a battery cell, a battery, an electric apparatus, and a preparation method and apparatus of battery cell. A tab is flattened to different depths, so that two regions with a depth difference are formed from inside to outside of the tab, namely a first flattened portion and a second flattened portion. Moreover, the second flattened portion on the outer ring is controlled to be lower than the first flattened portion on the inner ring, so that when an electrode assembly is packaged in a housing, the second flattened portion near an inner wall of the housing is at a lower position. In this case, even if the second flattened portion lifts up due to accumulation of internal elastic force, it cannot cross a circumferential structure of the tab, such as the top of a first insulating member, to lap over the inner wall of the housing. This effectively reduces the risk of electrochemical corrosion caused by the tab lapping over the housing, thereby reducing the phenomenon of electrolyte leakage in the battery cell and improving reliability.

FIG. 5

## Description

### TECHNICAL FIELD

This application relates to the field of battery technology, and in particular, to a battery cell, a battery, an electric apparatus, and a preparation method and apparatus of battery cell.

### BACKGROUND

The electrode assembly is a component where electrochemical reactions take place in a battery cell, and is mainly formed by winding or stacking positive electrode plates and negative electrode plates, typically with a separator sandwiched between the negative electrode plate and the positive electrode plate. When wound, the electrode assembly can be of a flat structure, a cylindrical structure, or the like. For cylindrical electrode assemblies, the battery cell is at risk of corrosion and electrolyte leakage during use, seriously affecting the reliability of the battery cell.

### SUMMARY

In view of this, it is necessary to provide a battery cell, a battery, an electric apparatus, and a preparation method and apparatus of battery cell, so as to effectively reduce the risk of corrosion and electrolyte leakage in the battery cell and improve reliability of the battery cell.

According to a first aspect, this application provides a battery cell including an electrode assembly. The electrode assembly includes: a main body portion, and a tab disposed on at least one end of the main body portion along a predetermined direction; where the tab includes a first flattened portion and a second flattened portion, the second flattened portion surrounds an outer periphery of the first flattened portion, and along the predetermined direction, the first flattened portion protrudes from the second flattened portion.

In the above electrode assembly, the tab is flattened to different depths, so that two regions with a depth difference are formed from inside to outside of the tab, namely the first flattened portion and the second flattened portion. Moreover, the second flattened portion on the outer ring is controlled to be lower than the first flattened portion on the inner ring, so that when the electrode assembly is packaged in a housing, the second flattened portion near an inner wall of the housing is at a lower position. In this case, even if the second flattened portion lifts up due to accumulation of internal elastic force, it cannot cross a circumferential structure of the tab, such as the top of a first insulating member, to lap over the inner wall of the housing. This effectively reduces the risk of electrochemical corrosion caused by the tab lapping over the housing, thereby reducing the phenomenon of electrolyte leakage in the battery cell and improving reliability.

In some embodiments, a compactness of the first flattened portion is denoted as Q1, a compactness of the second flattened portion is denoted as Q2, and Q1 and Q2 meet the following condition: Q2 > Q1. In this way, the compactness of the second flattened portion is higher than that of the first flattened portion, so that the outer-ring part of the tab is more flattened and less likely to lift, effectively reducing the risk of electrochemical corrosion caused by the tab at this part lifting up and lapping over the housing.

In some embodiments, Q1 and Q2 further meet the following condition: $105\% \leq Q2/Q1 \leq 140\%$. In this way, the value of Q2/Q1 is properly controlled, which can effectively reduce the risk of the second flattened portion lifting up and lapping over the housing, and can also reduce structural damage to the tab.

In some embodiments, Q1/Q2 further meet the following condition: $105\% \leq Q2/Q1 \leq 130\%$. In this way, the value of Q2/Q1 is further properly controlled, which can effectively reduce structural damage to the tab caused by excessive flattening of the second flattened portion, while reducing the risk of the second flattened portion lifting up and lapping over the housing.

In some embodiments, along the predetermined direction, a height by which the first flattened portion protrudes from the second flattened portion is denoted as h1, and $1\,mm \leq h1 \leq 4\,mm$. In this way, the height difference between the first flattened portion and the second flattened portion is controlled to be 1 mm to 4 mm, so that the second flattened portion is at a lower position, making it less likely for the lifted second flattened portion to lap over the inner wall of the housing.

In some embodiments, h1 further meets the following condition: $1\,mm \leq h1 \leq 2.5\,mm$. In this way, the value of h1 is further properly controlled, which can effectively reduce structural damage to the tab caused by excessive flattening of the second flattened portion, while reducing the risk of the second flattened portion lifting up and lapping over the housing.

In some embodiments, the second flattened portion includes an inner edge adjacent to the first flattened portion and an outer edge surrounding the inner edge, and a distance between the inner edge and the outer edge is denoted as L, where $1\,mm \leq L \leq 5\,mm$. In this way, the value of the distance L is properly controlled, which effectively reduces the risk of the tab lifting up and lapping over the housing, and also allows for a reasonable welding area on the first flattened portion to improve current-carrying capacity.

In some embodiments, L further meets the following condition: $1\,mm \leq L \leq 3\,mm$. In this way, the value of L is further properly controlled, which effectively reduces the risk of the tab lifting up and lapping over the housing, and also maximizes the welding area of the first flattened portion to further improve the current-carrying capacity.

In some embodiments, the second flattened portion includes an inner edge adjacent to the first flattened portion and an outer edge surrounding the inner edge, and a distance between the inner edge and the outer edge is denoted as L; and along the predetermined direction, a height by which the first flattened portion protrudes from the second flattened portion is denoted as h1, and L and h1 further meet the following condition: L > h1. In this way, the height h1 is controlled to be less than the distance L, so that even if the first flattened portion bends, it cannot extend beyond the second flattened portion to lap over the housing, thereby effectively reducing the likelihood of corrosion and electrolyte leakage caused by the first flattened portion lapping over the housing.

In some embodiments, the electrode assembly is constructed as a cylindrical structure; and along a radial direction of the electrode assembly, an outer diameter of the electrode assembly at the main body portion is denoted as Y, half of a difference between an outer diameter and an inner diameter of the second flattened portion is denoted as L, and Y and L meet the following condition: $\frac{4Y-96}{49} \leq L \leq \frac{5Y-80}{26}$. The inequality relationship between Y and L is set so that the two parameters are correlated to achieve the optimal value of L for battery cells of different diameters. This can reduce the likelihood of the tab lifting up and lapping over the housing, without affecting the current-carrying area of the first flattened portion.

In some embodiments, the electrode assembly includes a separator, and along the predetermined direction, the first flattened portion and the second flattened portion both protrude from the separator. In this way, the first flattened portion and the second flattened portion both protrude from the separator, reducing the probability of the tab damaging the separator during flattening.

In some embodiments, the battery cell further includes: a housing having an opening, where the electrode assembly is accommodated inside the housing, and the tab is disposed facing the corresponding opening; and a first insulating member located inside the housing, surrounding an outer periphery of the second flattened portion, and protruding from the second flattened portion along the predetermined direction.

In some embodiments, along the predetermined direction, a height by which the first insulating member protrudes from the second flattened portion is denoted as h2, and 7 mm ≤ h2 ≤ 15 mm. In this way, the value of the height h2 is properly controlled, which can effectively reduce the probability of the fully lifted second flattened portion lapping over the housing to cause corrosion and electrolyte leakage, and can also reduce the waste of space above the second flattened portion.

In some embodiments, h2 further meets the following condition: 10 mm ≤ h2 ≤ 15 mm. In this way, the lower limit value of h2 is increased so that the protruding part of the first insulating member is more capable of reducing the probability of the lifted second flattened portion lapping over the housing.

In some embodiments, the first insulating member protrudes from the first flattened portion along the predetermined direction. In this way, the design that the first insulating member protrudes from the first flattened portion not only enhances the protection for the second flattened portion, but also improves the protection for the first flattened portion.

In some embodiments, the battery cell further includes an end cover assembly disposed covering the opening, where the first insulating member is in contact with the end cover assembly. In this way, the end cover assembly and the first insulating member are designed to be in contact in the predetermined direction which can effectively prevent the first flattened portion or the second flattened portion from lifting up along a direction perpendicular to the predetermined direction, greatly reducing the likelihood of the tab lifting up and lapping over the housing.

In some embodiments, the end cover assembly includes an end cover and a second insulating member, where the end cover is disposed covering the opening, the second insulating member is disposed on a side of the end cover facing the electrode assembly, and the first insulating member surrounds at least part of an outer periphery of the second insulating member and is in contact with the second insulating member. In this way, the structure of the second insulating member and the fitting relationship between the first insulating member and the second insulating member are properly designed, which can effectively reduce the likelihood of the lifted first flattened portion or second flattened portion lapping over the housing, reducing the risk of corrosion and electrolyte leakage of the battery cell.

In some embodiments, at least part of the second insulating member surrounds the outer periphery of the first flattened portion. In this way, the protection at the first flattened portion is further enhanced, reducing the risk of the first flattened portion lapping over the housing, thereby improving the reliability of the battery cell.

In some embodiments, an end of the second insulating member far away from the end cover is located within the enclosure of the first insulating member, a distance between this end and an end of the first insulating member facing the end cover in the predetermined direction is denoted as h3, and 3 mm ≤ h3 ≤ 8 mm. In this way, the distance h3 between the first insulating member and the second insulating member is properly controlled, which can effectively reduce the probability of the lifted first flattened portion or second flattened portion protruding from the gap between the first insulating member and the second insulating member to lap over the housing.

In some embodiments, the first insulating member is bonded to a circumferential side surface of the second insulating member. Such design allows the first insulating member and the second insulating member to be securely connected, which can effectively reduce the risk of the lifted first flattened portion or second flattened portion widening the gap between the first insulating member and the second insulating member and lapping over the housing.

In some embodiments, the end cover assembly includes an electrode terminal, and the second insulating member includes a body portion and an extension portion connected to each other, where the body portion is disposed between the end cover and the electrode terminal, and the extension portion extends from the body portion towards the electrode assembly and surrounds the outer periphery of the first flattened portion. This design reduces the probability of the first flattened portion being compressed to deform due to the second insulating member compressing the first flattened portion along the predetermined direction during assembly.

According to a second aspect, this application provides a battery including the battery cell according to any one of the above embodiments.

According to a third aspect, this application provides an electric apparatus including the battery according to any one of the above embodiments, where the battery is configured to provide electric energy.

According to a fourth aspect, this application provides a preparation method of battery cell, including the following steps: providing an electrode assembly; and flattening a tab of the electrode assembly to different depths to form a first flattened portion and a second flattened portion surrounding the first flattened portion, where along a predetermined direction of the electrode assembly, the first flattened portion protrudes from the second flattened portion.

In the above preparation method of battery cell, the tab is flattened to different depths so that the first flattened portion and the second flattened portion with a depth difference are formed on the tab. When the prepared electrode assembly is packaged in the housing, the second flattened portion close to the inner wall of the housing is at a lower position. In this case, even if the second flattened portion lifts up due to accumulation of internal elastic force, it cannot cross a circumferential structure of the tab to lap over the inner wall of the housing. This effectively reduces the risk of electrochemical corrosion caused by the tab lapping over the housing, thereby reducing the phenomenon of electrolyte leakage in the battery cell and improving reliability.

According to a fifth aspect, this application provides a preparation apparatus of battery cell, including: a driving mechanism; and a flattening wheel driven by the driving mechanism and rotating around its own axis; where the flattening wheel includes a wheel body and a flattening protrusion, the flattening protrusion is disposed on a flattening surface of the wheel body and extends circumferentially around the wheel body.

In the above preparation apparatus of battery cell, the annular flattening protrusion is designed on the flattening surface of the wheel body. During the flattening process, the flattening protrusion first acts on the tab; and after flattening to a certain depth, the flattening surface then comes into contact with the inner-ring region of the tab and flattens it. In this way, the first flattened portion and the second flattened portion with a depth difference can be formed on the tab by using the flattening wheel. When the prepared electrode assembly is packaged in the housing, the second flattened portion close to the inner wall of the housing is at a lower position. In this case, even if the second flattened portion lifts up due to accumulation of internal elastic force, it cannot lap over the inner wall of the housing. This effectively reduces the risk of electrochemical corrosion caused by the tab lapping over the housing, thereby reducing the phenomenon of electrolyte leakage in the battery cell and improving reliability.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

**BRIEF DESCRIPTION OF DRAWINGS**

Persons of ordinary skill in the art will be clear about various other advantages and benefits by reading the detailed description of the preferred embodiments below. The accompanying drawings are merely intended to illustrate the preferred embodiments and are not intended to limit this application. In addition, in all the accompanying drawings, the same reference signs represent the same components. In the accompanying drawings:

FIG. 1 is a schematic structural diagram of a vehicle according to some embodiments of this application;
FIG. 2 is an exploded structural view of a battery according to some embodiments of this application;
FIG. 3 is a cross-sectional structural view of a battery cell according to some embodiments of this application;
FIG. 4 is a schematic structural diagram of a battery cell according to some embodiments of this application;
FIG. 5 is a schematic structural diagram of an electrode assembly according to some embodiments of this application;
FIG. 6 is a partial structural view of the electrode assembly in FIG. 5;
FIG. 7 is an enlarged structural view of circle A in FIG. 6;
FIG. 8 is a partial structural view of an electrode assembly according to some other embodiments of this application;
FIG. 9 is a flowchart of a preparation method of battery cell according to some embodiments of this application; and

FIG. 10 is a schematic structural diagram of a flattening wheel according to some embodiments of this application.

1000, vehicle; 100, battery; 101, bottom shell; 102, top cover; 200, controller; 300, motor; 400, battery module; 401, shell; 40a, cylinder; 40b, first cover body; 40c, second cover body; 10, battery cell; 11, housing; 111, opening; 12, electrode assembly; 121, main body portion; 122, end portion; 13, tab; 131, first flattened portion; 132, second flattened portion; 13a, inner edge; 13b, outer edge; 14, end cover assembly; 141, end cover; 142, second insulating member; 14a, body portion; 14b, extension portion; 14c, guide surface; 14d, recess; 143, electrode terminal; 15, connecting piece; 16, first insulating member; 17, separator; 20, flattening wheel; 21, wheel body; 22, flattening surface; 23, flattening protrusion; X, predetermined direction; and Z, radial direction.

## DESCRIPTION OF EMBODIMENTS

The following describes in detail embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of some embodiments of this application, the terms "first", "second", and the like are merely intended to distinguish between different objects, and shall not be understood as any indication or implication of relative importance or any implicit indication of the number, sequence or primary-secondary relationship of the technical features indicated. In the descriptions of the embodiments of this application, "multiple" means more than two, unless otherwise specifically defined.

In this specification, reference to "embodiment" means that specific features, structures or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the descriptions of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects.

In the descriptions of the embodiments of this application, the term "multiple" means more than two (inclusive). Similarly, "multiple groups" means more than two (inclusive) groups, and "multiple pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitation on the embodiments of this application.

In the descriptions of the embodiments of this application, unless otherwise specified and defined explicitly, the technical terms "mount", "connect", "join", and "fix" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the embodiments of this application as suitable to specific situations.

Currently, from the perspective of market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

The applicant has noted that to meet the assembly requirements of the battery cell, such as facilitating the welding of the connecting piece and the tab, typically the end surface of the tab is flattened to increase the welding area. However, the flattened tab will accumulate elastic force. During assembly of the battery cell, the tab will not immediately lift due to the accumulated elastic force. Instead, after the battery cell has been used for a period of time, the tab will lift due to the accumulated elastic force and lap over the inner wall of the housing, leading to electrochemical corrosion and electrolyte leakage in the battery cell. For example, electrochemical corrosion can cause an increase in voltage or current in the battery cell. As a result, the pressure relief mechanism (such as the explosionproof membrane) on the battery cell can be easily punctured, resulting in electrolyte leakage in the battery cell or other issues.

To reduce the risk of the lifted tab lapping over the inner wall of the housing, a method of attaching a first insulating member (such as tab glue) to the outer periphery of the tab is designed to use the first insulating member to prevent the tab from lapping over the housing. However, this solution cannot effectively solve the problem, and part of the tab still lifts and crosses the top of the first insulating member to lap over the inner wall of the housing, especially the part of the tab close to the inner wall of the housing.

In view of this, to solve the problem of corrosion and electrolyte leakage in traditional battery cells during use, the applicant has conducted in-depth research and designed a battery cell. The tab is flattened to different depths, so that two regions with a depth difference are formed from inside to outside of the tab, with the second flattened portion lower than the first flattened portion. In this way, when the electrode assembly is packaged in the housing, the second flattened portion close to the inner wall of the housing is at a lower position. In this case, even if the second flattened portion lifts up due to accumulation of internal elastic force, it cannot cross the top of the first insulating member to lap over the inner wall of the housing. This effectively reduces the risk of electrochemical corrosion caused by the tab lapping over the housing, thereby reducing the phenomenon of electrolyte leakage in the battery cell and improving reliability.

Additionally, the design of flattening to different depths reduces the likelihood of the tab lifting up and lapping over the housing, and also helps to solve the problem of short circuits in the battery cell during use.

The battery cell disclosed in the embodiments of this application may be used without limitation in an electric apparatus such as a vehicle, a ship, or an aircraft. The battery cell, battery, and the like disclosed in this application may be used to constitute a power supply system of that electric apparatus.

An embodiment of this application provides an electric apparatus that uses a battery as a power source. The electric apparatus may be but is not limited to a mobile phone, a tablet, a laptop computer, an electric toy, an electric tool, an electric bicycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, an electric apparatus according to an embodiment of this application being a vehicle 1000 is used as an example for description of the following embodiments.

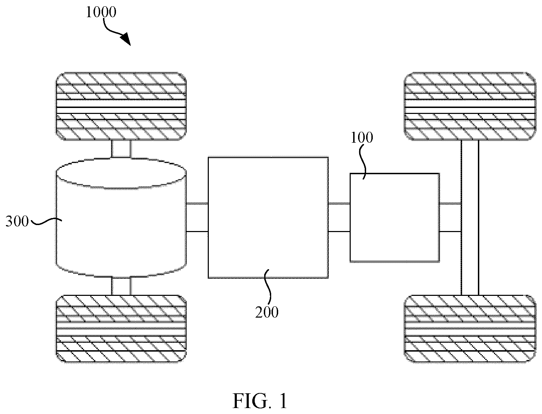

Referring to FIG. 1, FIG. 1 is a schematic structural diagram of a vehicle 1000 according to some embodiments of this application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery 100 inside, where the battery 100 may be arranged at the bottom, front, or rear of the vehicle 1000. The battery 100 may be configured to supply power to the vehicle 1000. For example, the battery 100 may be used as an operational power supply for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

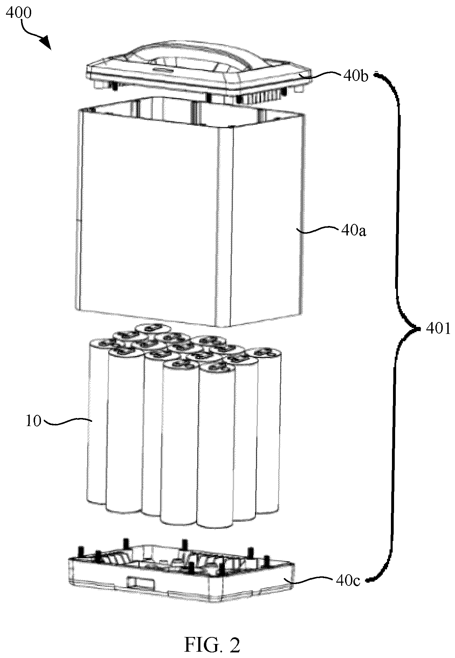

The battery 100 includes a box. The box is not limited to a specific type. The box may be a frame-shaped box, a disc-shaped box, or a box-shaped box. The battery 100 may be directly designed as a structure without a battery module or a structure with a battery module 400. For example, the box includes a bottom shell 101 and a top cover 102 that covers the bottom shell 101. The bottom shell 101 and the top cover 102 are engaged to form an accommodating portion. The battery 100 includes multiple cylindrical battery cells 10, such as cylindrical battery cells and hexagonal prism battery cells. The cylindrical battery cell refers to a battery cell 10 that has a cylindrical structure in appearance. The multiple battery cells 10 may form the battery 100, or the multiple battery cells 10 may first form a battery module 400, and then multiple battery modules 400 form the battery 100. FIG. 2 illustratively shows a battery module 400 according to an embodiment. The battery module 400 is disposed in the accommodating portion of the box.

In some embodiments, to meet different power usage requirements, the battery 100 may include multiple battery cells 10. The multiple battery cells 10 may be connected in series, parallel, or series-parallel, where being connected in series-parallel means a combination of series and parallel connections. In other words, the multiple battery cells 10 may be directly disposed in the accommodating portion of the box to form the battery 100.

As shown in FIG. 2, the battery 100 includes a shell 401 and the battery cell 10 disposed in the shell 401. In an example, the shell 401 includes a cylinder 40a, a first cover body 40b, and a second cover body 40c. The first cover body 40b and the second cover body 40c are respectively disposed at two ends of the cylinder 40a. The first cover body 40b and the second cover body 40c are both detachably connected to the cylinder 40a. For example, the first cover body 40b and the second cover body 40c may be snap-fitted or screwed to the cylinder 40a. The cylinder 40a, the first cover body 40b, and the second cover body 40c are assembled to form an accommodating space. The battery cell 10 is disposed in the accommodating space of the shell 401.

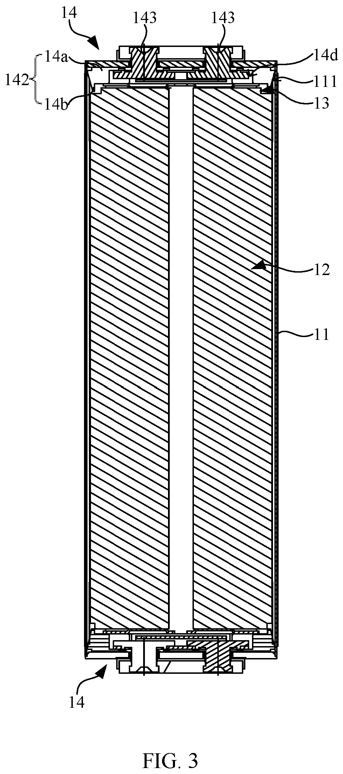

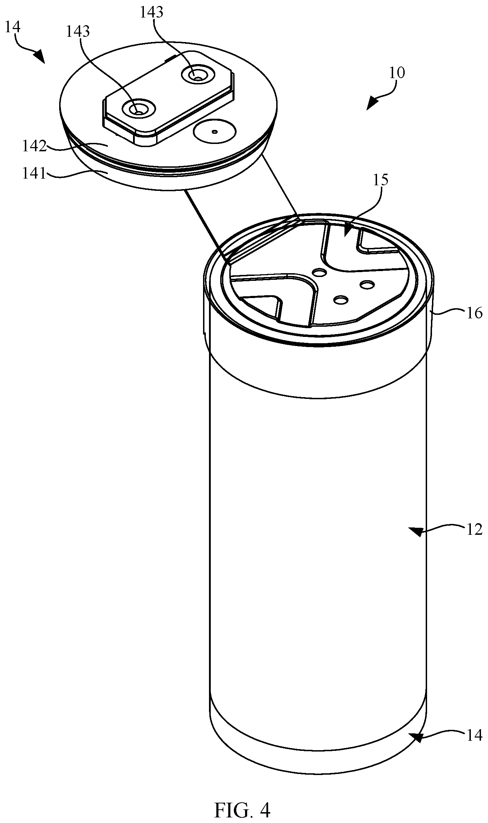

Referring to FIG. 3 and FIG. 4, the battery cell 10 in an embodiment of this application includes a housing 11 and an electrode assembly 12 disposed inside the housing 11. The housing 11 in this embodiment of this application is of a cylindrical structure. The housing 11 has an inner space for accommodating the electrode assembly 12 and an electrolyte, and an opening 111 communicating with the inner space. The electrode assembly 12 may be placed into the housing 11 from the opening 111 of the housing 11. The housing 11 may be made of materials such as aluminum, aluminum alloy, or plastic. The electrode assembly 12 includes a tab 13. Along a predetermined direction X, the tab 13 is located at an end of the electrode assembly 12.

As shown in FIG. 4, the battery cell 10 in this embodiment of this application further includes an end cover assembly 14 and a connecting piece 15. The end cover assembly 14 includes an end cover 141, a second insulating member 142, and an electrode terminal 143. The end cover 141 refers to a component that covers the opening 111 of the housing 11 to isolate the internal environment of the battery cell 10 from the external environment. Without limitation, a shape of the end cover 141 may be adapted to a shape of the housing 11 to fit the housing 11. Optionally, the end cover 141 may be made of a material with certain hardness and strength (for example, aluminum alloy), so that the end cover 141 is less likely to deform when subjected to extrusion and collision, allowing the battery cell 10 to have higher structural strength and enhanced safety performance. The end cover 141 may be provided with functional components such as the electrode terminal 143. The electrode terminal 143 may be configured to be electrically connected to the electrode assembly 12 for outputting or inputting electric energy of the battery cell 10. In some embodiments, the end cover 141 may further be provided with a pressure relief mechanism for releasing internal pressure when the internal pressure, temperature, current, or voltage of the battery cell 10 reaches a threshold. The end cover 141 may also be made of various materials, such as copper, iron, aluminum, stainless steel, aluminum alloy, and plastic. This is not particularly limited in the embodiments of this application. In some embodiments, the second insulating member 142 may also be provided inside the end cover 141, and the second insulating member 142 may be configured to isolate an electrical connection component in the housing 11 from the end cover 141 to reduce the risk of short circuit. For example, the second insulating member 142 may be made of plastic, rubber, or the like.

The electrode assembly 12 is a component in which electrochemical reactions take place in the battery cell 10. There may be one or more electrode assemblies 12 in housing 11. The electrode assembly 12 is typically formed by winding positive electrode plates and negative electrode plates, and the electrode assembly 12 may be a cylindrical structure, such as cylindrical or hexagonal prism, typically with a separator 17 provided between the positive electrode plate and the negative electrode plate. A positive electrode tab and a negative electrode tab may be respectively located at two ends of the main body portion 121. During the charging and discharging process of the battery 100, the positive electrode tab 13 is electrically connected to the electrode terminal 143 to form a current loop.

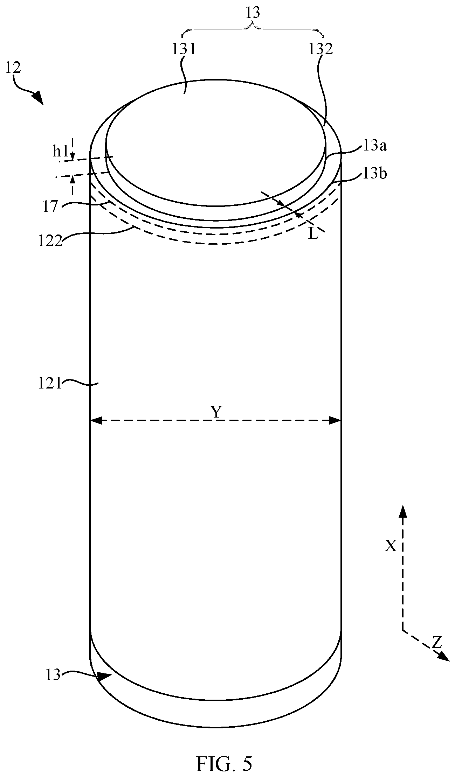

According to some embodiments of this application, referring to FIG. 5, this application provides a battery cell 10. The battery cell 10 includes an electrode assembly 12. The electrode assembly 12 includes a main body portion 121 and a tab 13. The tab 13 is disposed on at least one end of the main body portion 121 along a predetermined direction X. The tab 13 includes a first flattened portion 131 and a second flattened portion 132, the second flattened portion 132 surrounds an outer periphery of the first flattened portion 131, and along the predetermined direction X, the first flattened portion 131 protrudes from the second flattened portion 132.

The electrode assembly 12 may be designed as a cylindrical structure, for example, may be designed as but is not limited to cylindrical, hexagonal prism, or other polygonal prism structures. The predetermined direction X may also be understood as a length direction of the electrode assembly 12.

The main body portion 121 refers to a part of the electrode assembly 12 for generating electric energy, for example, a structure formed by winding the parts with active substance on the positive electrode plate and the negative electrode plate. The tab 13 refers to a component including the parts not coated with active substance on the positive electrode plate and the negative electrode plate, or may be understood as being formed by an end portion 122 of the main body portion 121 extending along the predetermined direction X.

The tabs 13 may be disposed at one end of the electrode assembly 12; or may be disposed at opposite ends of the electrode assembly 12. When the tabs 13 is disposed at the opposite ends of the electrode assembly 12, the positive electrode tab and the negative electrode tab are respectively located at the opposite ends of the electrode assembly 12. When the tabs 13 is disposed at one end of the electrode assembly 12, it means that both the positive and negative electrode tabs 13 are located on the same side of the electrode assembly 12, and in this case, the positive and negative electrode tabs 13 need to be distinguished on the same end during winding. For example, during inner-ring winding, the positive electrode tab can be reserved on the positive electrode plate, and no negative electrode tab is reserved on the negative electrode plate; and during outer-ring winding, no positive electrode tab is reserved on the positive electrode plate, and the negative electrode tab is reserved on the negative electrode plate. This arrangement results in the middle part being the positive electrode tabs and the outer-ring part being the negative electrode tabs.

The first flattened portion 131 and the second flattened portion 132 refer to the middle and outer-ring structures of the tab 13, respectively, and during the forming process, they are flattened on the end surface of the electrode assembly 12 by the flattening operation. Compared with the traditional cutting method, the end surface of the flattened tab 13 is smoother and more compact, facilitating welding of the connecting piece 15 or the electrode terminal 143 to the tab 13, and improving the welding structure strength.

The first flattened portion 131 protrudes from the second flattened portion 132, indicating that the first flattened portion 131 is higher than the second flattened portion 132, or that the flattening depth of the second flattened portion 132 is relatively deeper during the flattening process.

When the electrode assembly 12 is packaged in the housing 11, the second flattened portion 132 close to an inner wall of the housing 11 is at a lower position. In this case, even if the second flattened portion 132 lifts up due to accumulation of internal elastic force, it cannot cross a circumferential structure of the tab 13, such as the top of a first insulating member 16, to lap over the inner wall of the housing 11. This effectively reduces the risk of electrochemical corrosion caused by the tab 13 lapping over the housing 11, thereby reducing the phenomenon of electrolyte leakage in the battery cell 10 and improving reliability.

According to some embodiments of this application, a compactness of the first flattened portion 131 is denoted as Q1, a compactness of the second flattened portion 132 is denoted as Q2, and Q1 and Q2 meet the following condition: Q2 > Q1.

Compactness refers to the flattening density of the first flattened portion 131 or the second flattened portion 132. To obtain the compactness of the first flattened portion 131 and the second flattened portion 132, for the cylindrical electrode assembly 12, the following test methods can be used: 1. For the compactness of the first flattened portion 131, cut the first flattened portion 131 along a radial direction Z of the electrode assembly 12, weigh it, and record the weight as m; measure a diameter d and a thickness h of the cut first flattened portion 131; and calculate the compactness according to the formula $Q1 = \frac{m}{(d/2)^2 * 3.14 * h}$. 2. For the compactness of the second flattened portion 132, the test method is roughly the same as that of the first flattened portion 131, with the difference being in that the outer diameter and inner diameter of the second flattened portion 132 need to be tested (that is, the second flattened portion 132 is an annular structure).

Making the compactness of the second flattened portion 132 higher than that of the first flattened portion 131 allows the outer-ring part of the tab 13 to be more flattened and less likely to lift, effectively reducing the risk of electrochemical corrosion caused by the tab 13 lifting up and lapping over the housing 11.

According to some embodiments of this application, Q1 and Q2 further meet the following condition: $105\% \leq Q2/Q1 \leq 140\%$.

The value of Q2/Q1 may be a value between 105% and 140%. For example, Q2/Q1 may be but is not limited to 105%, 110%, 120%, or 140%. If Q2/Q1 is too small, for example, less than 105%, the flattening degree of the second flattened portion 132 is similar to that of the first flattened portion 131, and a large depth difference cannot be created, resulting in the second flattened portion 132 prone to lift and lap over the housing 11. If Q2/Q1 is too large, for example, greater than 140%, it indicates that the second flattened portion 132 is excessively flattened, which not only affects assembly of the electrode assembly 12 but also easily damages the structure of the tab 13 due to force of excessive flattening.

Properly controlling the value of Q2/Q1 can effectively reduce the risk of the second flattened portion 132 lifting up and lapping over the housing 11, and can also reduce structural damage to the tab 13.

According to some embodiments of this application, Q1/Q2 further meet the following condition: $105\% \leq Q2/Q1 \leq 130\%$.

The value of Q2/Q1 may be a value between 105% and 130%. For example, Q2/Q1 may be but is not limited to 105%, 110%, 120%, or 130%. Further restricting the upper limit of Q2/Q1 can reduce the occurrence of excessive flattening of the second flattened portion 132.

Further properly controlling the value of Q2/Q1 can effectively reduce structural damage to the tab 13 caused by excessive flattening of the second flattened portion 132, while reducing the risk of the second flattened portion 132 lifting up and lapping over the housing 11.

According to some embodiments of this application, referring to FIG. 5, along the predetermined direction X, a height by which the first flattened portion 131 protrudes from the second flattened portion 132 is denoted as h1, and 1 millimeter (mm) $\leq h1 \leq 4$ mm.

The first flattened portion 131 protrudes from the second flattened portion 132, indicating that the second flattened portion 132 is lower than the first flattened portion 131. The height h1 by which the second flattened portion 132 is lower than the first flattened portion 131 may be a value between 1 mm and 4 mm. For example, the height h1 may be but is not limited to 1 mm or 4 mm.

The height difference between the first flattened portion 131 and the second flattened portion 132 is controlled between 1 mm and 4 mm, so that the second flattened portion 132 is at a lower position, making it less likely for the lifted second flattened portion 132 to lap over an inner wall of the housing 11.

According to some embodiments of this application, referring to FIG. 5, h1 further meets the following condition: 1 mm ≤ h1 ≤ 2.5 mm.

The height h1 by which the second flattened portion 132 is lower than the first flattened portion 131 may be a value between 1 mm and 2.5 mm. For example, the height h1 may be but is not limited to 1 mm or 2.5 mm. Additionally, the upper limit of h1 is limited to restrict the flattening descent of the second flattened portion 132 from exceeding 2.5 mm, reducing the risk of excessive flattening.

The value of h1 is further properly controlled, which can effectively reduce damage to the tab 13 caused by excessive flattening of the second flattened portion 132, while reducing the risk of the second flattened portion 132 lifting up and lapping over the housing 11.

According to some embodiments of this application, referring to FIG. 5, the second flattened portion 132 includes an inner edge 13a adjacent to the first flattened portion 131 and an outer edge 13b surrounding the inner edge 13a, and a distance between the inner edge 13a and the outer edge 13b is denoted as L, and 1 mm ≤ L ≤ 5 mm.

The specific test method for the distance L can be determined according to the specific shape of the electrode assembly 12. For example, when the electrode assembly 12 is of a cylindrical structure, the distance L may be half of a difference between an outer diameter and an inner diameter of the second flattened portion 132 in a radial direction Z of the electrode assembly 12; or when the electrode assembly 12 is of another polygonal prism structure, the inner edge 13a and the outer edge 13b are both polygons, and in this case, a perpendicular line can be drawn between the inner edge 13a and the outer edge 13b, and a length of the perpendicular line is the distance L.

The distance L may be a value between 1 mm and 5 mm. For example, the distance L may be but is not limited to 1 mm or 5 mm. If the value of the distance L is too small, the first flattened portion 131 is too close to the inner wall of the housing 11, increasing the risk of the tab 13 lapping over the housing 11. If the value of the distance L is too large, the welding area between the first flattened portion 131 and the connecting piece 15 is reduced, affecting the current-carrying capacity of the battery cell 10.

Properly controlling the value of the distance L effectively reduces the risk of the tab 13 lifting up and lapping over the housing 11, and also allows for an appropriate welding area on the first flattened portion 131 to improve current-carrying capacity.

According to some embodiments of this application, referring to FIG. 5, L further meets the following condition: 1 mm ≤ L ≤ 3 mm.

The distance L may be a value between 1 mm and 3 mm. For example, the distance L may be but is not limited to 1 mm or 3 mm. Additionally, the upper limit of L is limited so as to increase the welding area between the first flattened portion 131 and the connecting piece 15, reducing the influence of the excessively flattened second flattened portion 132 on the current-carrying density of the tab 13.

Further properly controlling the value of L can effectively reduce the risk of the tab 13 lifting up and lapping over the housing 11, and also maximize the welding area of the first flattened portion 131 to further improve current-carrying capacity.

According to some embodiments of this application, the second flattened portion 132 includes an inner edge 13a adjacent to the first flattened portion 131 and an outer edge 13b surrounding the inner edge 13a, and a distance between the inner edge 13a and the outer edge 13b is denoted as L; and along the predetermined direction X, a height by which the first flattened portion 131 protrudes from the second flattened portion 132 is denoted as h1, and L and h1 further meet the following condition: L > h1.

If the height h1 is greater than the distance L, it indicates that when the first flattened portion 131 bends towards the second flattened portion 132, at least part of the bent first flattened portion 131 extends beyond the second flattened portion 132 to lap over the housing 11.

Therefore, controlling the height h1 to be less than the distance L ensures that even if the first flattened portion 131 bends, it cannot extend beyond the second flattened portion 132 to lap over the housing 11. This effectively reduces the likelihood of corrosion and electrolyte leakage caused by the first flattened portion 131 lapping over the housing 11.

According to some embodiments of this application, referring to FIG. 5, the electrode assembly 12 is constructed as a cylindrical structure; and along a radial direction Z of the electrode assembly 12, an outer diameter of the electrode assembly 12 at the main body portion 121 is denoted as Y, and half of a difference between an outer diameter and an inner diameter of the second flattened portion 132 is denoted as L, and Y and L meet the following condition: $\frac{4Y-96}{49} \leq L \leq \frac{5Y-80}{26}$.

When the electrode assembly 12 is a cylindrical structure, the inner edge 13a and the outer edge 13b on the second flattened portion 132 are two concentric circles, so half of the difference between the outer diameter and the inner diameter is a distance between the inner edge 13a and the outer edge 13b.

The value of L can be determined based on the outer diameter of the electrode assembly 12, for exam-

ple, $\frac{4Y-96}{49} \leq L \leq \frac{5Y-80}{26}$. In some examples, when the outer diameter of the cylindrical electrode assembly 12 is 46 mm, L may be in the range of 1.80 mm to 5.77 mm; or when the outer diameter of the cylindrical electrode assembly 12 is 34 mm, L may be in the range of 0.82 mm to 3.46 mm.

The inequality relationship between Y and L is set so that the two parameters are correlated to achieve the optimal value of L for battery cells 10 of different diameters. This can reduce the likelihood of the tab 13 lifting up and lapping over the housing 11, without affecting the current-carrying area of the first flattened portion 131.

According to some embodiments of this application, referring to FIG. 5, the electrode assembly 12 includes a separator 17, and along the predetermined direction X, the first flattened portion 131 and the second flattened portion 132 both protrude from the separator 17.

The separator 17 is a porous plastic film that ensures free passage of lithium ions to form a loop and also acts as an electronic insulator for preventing two electrodes from coming into contact with each other. A type of the separator may be selected from, without being limited to, a polyethylene single-layer film, a polypropylene single-layer film, and the like. In some embodiments, along the predetermined direction X, the separator 17 is typically designed to extend beyond the positive electrode plate and the negative electrode plate, that is, the separator 17 can extend beyond the end portion 122 of the main body portion 121. The end portion 122 of the main body portion 121 may be understood as one end of the coating region of the positive electrode plate or the negative electrode plate.

The first flattened portion 131 and the second flattened portion 132 both protrude from the separator 17, which can reduce the risk of the tab 13 damaging the separator 17 during flattening.

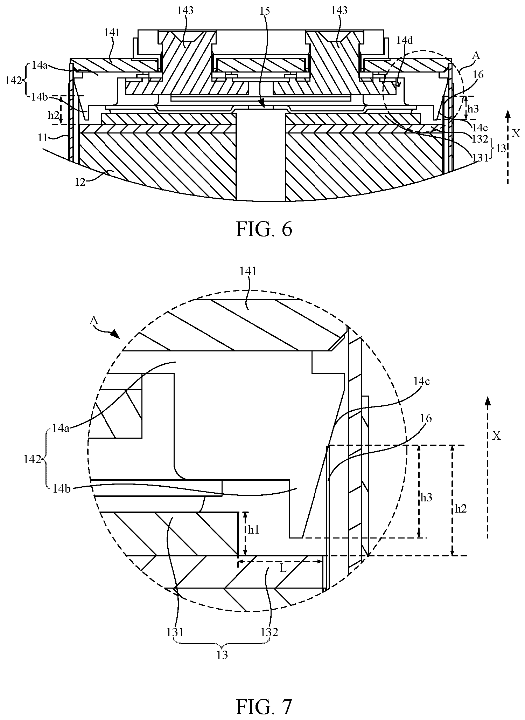

According to some embodiments of this application, referring to FIG. 3 and FIG. 6, the battery cell 10 further includes: a housing 11 and a first insulating member 16. The housing 11 has an opening 111, where the electrode assembly 12 is accommodated inside the housing 11, and the tab 13 is disposed facing the corresponding opening 111. The first insulating member 16 is located inside the housing 11, surrounds the outer periphery of the second flattened portion 132, and protrudes from the second flattened portion 132 along the predetermined direction X.

The housing 11 is a component used to form an internal environment of the battery cell 10, where the internal environment formed can be used to accommodate the electrode assembly 12, an electrolyte, and other components. One or two openings 111 can be provided on the housing 11. When two openings 111 are provided, the two openings 111 are respectively disposed at opposite ends of the housing 11 along the predetermined direction X. Additionally, if there are two tabs 13, and the two tabs 13 are respectively located at two ends of the electrode assembly 12, the two tabs 13 are disposed facing the respective openings 111.

The first insulating member 16 is a component that provides protection outside the second flattened portion 132 and can reduce the risk of the second flattened portion 132 directly coming into contact with the inner wall of the housing 11 when lifted. The first insulating member 16 surrounds the outside of the second flattened portion 132, forming a closed annular structure. The first insulating member 16 can be made from various materials. For example, the first insulating member 16 may be but is not limited to tab glue, and the like.

The first insulating member 16 is disposed on the outer periphery of the second flattened portion 132 to provide effective protection against the lifting up of the second flattened portion 132, further reducing the probability of the tab 13 lifting up and lapping over the housing 11 to cause corrosion and electrolyte leakage.

According to some embodiments of this application, referring to FIG. 6 and FIG. 7, along the predetermined direction X, a height by which the first insulating member 16 protrudes from the second flattened portion 132 is denoted as h2, and 7 mm ≤ h2 ≤ 15 mm.

The height by which the first insulating member 16 protrudes from the second flattened portion 132 may be a value between 7 mm and 15 mm. For example: the height h2 may be but is not limited to 7 mm, 15 mm, or the like.

For design of the height h2, if the value of the height h2 is too small, for example, less than 7 mm, the fully lifted second flattened portion 132 can cross the top of the first insulating member 16 to lap over the housing 11; and if the value of the height h2 is too large, for example, greater than 15 mm, space above the second flattened portion 132 is wasted.

Certainly, when the first insulating member 16 is tab glue, if the value of the height h2 is too large, the height h2 exceeds the height of the tab glue itself, making it impossible for the tab glue to adhere to the outer periphery of the second flattened portion 132.

Thus, properly controlling the value of height h2 can effectively reduce the probability of the fully lifted second flattened portion 132 lapping over the housing 11 to cause corrosion and electrolyte leakage, and can also reduce the waste of space above the second flattened portion 132.

According to some embodiments of this application, referring to FIG. 7, h2 further meets the following condition: 10 mm ≤ h2 ≤ 15 mm.

The height h2 may be a value between 10 mm and 15 mm. For example, the height h2 may be but is not limited to 10 mm, 15 mm, or the like.

The lower limit value of h2 is increased so that the protruding part of the first insulating member 16 is more capable of reducing the probability of the lifted second flattened portion 132 lapping over the housing 11.

According to some embodiments of this application, referring to FIG. 7, the first insulating member 16 protrudes from the first flattened portion 131 along the predetermined direction X.

The first insulating member 16 not only surrounds the second flattened portion 132 but also surrounds at least part of the first flattened portion 131. In this case, the first insulating member 16 also provides certain protection for the first flattened portion 131.

The design that the first insulating member 16 protrudes from the first flattened portion 131 not only enhances the protection for the second flattened portion 132, but also improves the protection for the first flattened portion 131.

According to some embodiments of this application, the battery cell 10 further includes an end cover assembly 14 disposed covering the opening 111. The first insulating member 16 is in contact with the end cover assembly 14.

The first insulating member 16 is in contact with the end cover assembly 14, indicating that no discontinuity exists between the end cover assembly 14 and the first insulating member 16 in the predetermined direction X, that is, extension in a direction perpendicular to the predetermined direction X is either blocked by the end cover assembly 14 or blocked by the first insulating member 16.

The number of end cover assemblies 14 can be determined based on the opening 111. For example, when two openings 111 are provided, two end cover assemblies 14 are provided in a one-to-one correspondence with the openings 111.

The design that the end cover assembly 14 is in contact with the first insulating member 16 along the predetermined direction X can effectively prevent the first flattened portion 131 or the second flattened portion 132 from lifting up along the direction perpendicular to the predetermined direction X, greatly reducing the likelihood of the tab 13 lifting up and lapping over the housing 11.

According to some embodiments of this application, referring to FIG. 7, the end cover assembly 14 includes an end cover 141 and a second insulating member 142, where the end cover 141 is disposed covering the opening 111, the second insulating member 142 is disposed on a side of the end cover 141 facing the electrode assembly 12, and the first insulating member 16 surrounds at least part of an outer periphery of the second insulating member 142 and is in contact with the second insulating member 142.

When the end cover 141 is disposed covering the opening 111, the end cover 141 can be hermetically connected to the housing 11 by welding, bonding, or the like, to improve air tightness of the battery cell 10.

The second insulating member 142 is a component, such as lower plastic, used to isolate the electrical connection components inside the housing 11 from the end cover 141 to reduce the risk of short circuits. The contact design between the second insulating member 142 and the first insulating member 16 in the predetermined direction X can create a relatively closed environment for the tab 13. Additionally, the second insulating member 142 and the first insulating member 16 can be connected to each other, or only in contact without being connected.

Moreover, when an end of the second insulating member 142 far away from the end cover 141 abuts against the second flattened portion 132, the first flattened portion 131 is entirely enclosed by the second insulating member 142 and the second flattened portion 132, making it impossible for the first flattened portion 131 to lap over the housing 11.

The structure of the second insulating member 142 and the fitting relationship between the first insulating member 16 and the second insulating member 142 are properly designed, which can effectively reduce the likelihood of the lifted first flattened portion 131 or second flattened portion 132 lapping over the housing 11, and reducing the risk of corrosion and electrolyte leakage in the battery cell 10.

According to some embodiments of this application, optionally, at least part of the second insulating member 142 surrounds the outer periphery of the first flattened portion 131.

At least part of the second insulating member 142 surrounds the outer periphery of the first flattened portion 131, providing protection for the first flattened portion 131. In some examples, a recess 14d is provided on a side surface of the second insulating member 142 facing away from the end cover 141, and at least part of the first flattened portion 131 is accommodated in the recess 14d. This allows the first insulating member 16 to provide better protection for the first flattened portion 131, further reducing the risk of the first flattened portion 131 lapping over the housing 11. Certainly, in the predetermined direction X, a distance between an end surface of the first flattened portion 131 and a bottom surface of the recess 14d can be controlled to be greater than or equal to 3 mm.

At least part of the second insulating member 142 surrounds the outer periphery of the first flattened portion 131, which can further enhance the protection for the first flattened portion 131, and reduce the risk of the first flattened portion 131 lapping over the housing 11, thereby improving reliability of the battery cell 10.

According to some embodiments of this application, referring to FIG. 6, an end of the second insulating member 142 far away from the end cover 141 is located within the enclosure of the first insulating member 16, a distance between this end and an end of the first insulating member 16 facing the end cover 141 in the predetermined direction X is denoted as h3, and $3 \text{ mm} \leq h3 \leq 8 \text{ mm}$.

In addition to having overlapping projections in the predetermined direction X, the second insulating member 142 and the first insulating member 16 also have overlapping projections in the direction perpendicular to the predetermined direction X. Certainly, such overlapping may be related to the group margin of the electrode assembly 12, which is not described in detail herein.

The end of the second insulating member 142 far away from the end cover 141 is located within the enclosure of the first insulating member 16, indicating that in the predetermined direction X, the end of the second insulating member 142 extends into the enclosure range of the first insulating member 16 and is lower than the end of the first insulating member 16 facing the end cover 141.

The distance h3 may be a value between 3 mm and 8 mm. For example, h3 may be but is not limited to 3 mm, 8 mm, or the like.

The distance h3 between the first insulating member 16 and the second insulating member 142 is properly controlled, which can effectively reduce the probability of the lifted first flattened portion 131 or second flattened portion 132 protruding from a gap between the first insulating member 16 and the second insulating member 142 to lap over the housing 11.

According to some embodiments of this application, referring to FIG. 6, the end cover assembly 14 includes an electrode terminal 143, and the second insulating member 142 includes a body portion 14a and an extension portion 14b connected to each other. The body portion 14a is located between the end cover 141 and the electrode terminal 143, and the extension portion 14b extends from the body portion 14a towards the electrode assembly 12 and surrounds the outer periphery of the first flattened portion 131.

The body portion 14a and the extension portion 14b are some structures of the second insulating member 142. The body portion 14a is disposed on a side surface of the end cover 141 facing the electrode assembly 12, and the extension portion 14b can be understood as a structure formed by at least part of the body portion 14a protruding towards the electrode assembly 12. In some examples, a recess 14d may be formed between the body portion 14a and the extension portion 14b. The extension portion 14b is disposed on the outer periphery of the first flattened portion 131 of the tab 13, and corresponds to a position of the second flattened portion 132 along the predetermined direction X. Since the second insulating member 142 has the extension portion 14b, during assembly, the extension portion 14b of the second insulating member 142 can be inserted into a gap between the first flattened portion 131 and the housing 11, so that the extension portion 14b can guide the first flattened portion 131 to accurately insert into the recess 14d of the second insulating member 142.

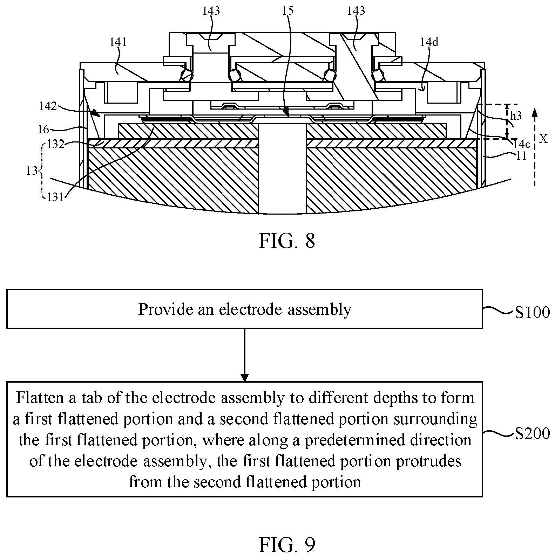

Additionally, a side surface of the extension portion 14b facing away from the recess 14d includes a guide surface 14c. Referring to FIG. 7 and FIG. 8, the guide surface 14c can abut against the first insulating member 16. The guide surface 14c extends in a direction leaving the end cover 141 and is inclined towards the recess 14d, so that under the guidance of the guide surface 14c, part of the second insulating member 142 can easily enter the space defined by the first insulating member 16. This helps reduce the likelihood of the second insulating member 142 directly pressing against the first insulating member 16 to cause the first insulating member 16 to collapse, thereby reducing the risk of the first insulating member 16 losing its insulating function.

Such design reduces the probability of the second insulating member 142 compressing the first flattened portion 131 along the predetermined direction X to cause the first flattened portion 131 to deform during assembly, and also allows the extension portion 14b to provide good protection and positioning for the first flattened portion 131 during assembly.

According to some embodiments of this application, referring to FIG. 6, an end of the first insulating member 16 facing the end cover 141 is bonded to a circumferential side surface of the second insulating member 142.

The circumferential side surface of the second insulating member 142 is a side surface of the second insulating member 142 facing the inner wall of the housing 11. Certainly, in some embodiments, this circumferential side surface includes the guide surface 14c on the extension portion 14b, or the like.

The first insulating member 16 is bonded to the second insulating member 142 so that they are securely connected. This can effectively reduce the risk of the lifted first flattened portion 131 or second flattened portion 132 widening the gap between the first insulating member 16 and the second insulating member 142 and lapping over the housing 11.

According to some embodiments of this application, this application provides a battery 100 including the battery cell 10 according to any one of the above embodiments.

According to some embodiments of this application, this application provides an electric apparatus including the battery 100 in any one of the above solutions, where the battery 100 is configured to provide electric energy.

According to some embodiments of this application, referring to FIG. 9, this application provides a preparation method of battery cell, including the following steps.

S100. Provide an electrode assembly 12.

S200. Flatten a tab 13 of the electrode assembly 12 to different depths to form a first flattened portion 131 and a second flattened portion 132 surrounding the first flattened portion 131, where along a predetermined direction X of the electrode assembly 12, the first flattened portion 131 protrudes from the second flattened portion 132.

In step S100, the electrode assembly 12 can be provided in various ways, for example, prepared through a winding process, directly purchased, or the like. The electrode assembly 12 of this application may be of a cylindrical structure, a hexagonal prism structure, or other prismatic structures.

In step S200, the tab 13 is flattened to different depths in different regions. For example, the inner-ring region of the tab 13 is shallowly flattened; the outer-ring region of the tab 13 is deeply flattened; or the like. Additionally, the flattening on different regions of the tab 13 can be carried out simultaneously or step by step. For example, the inner-ring region of the tab 13 is flattened first, and then the outer-ring region of the tab 13 is flattened; the outer-ring region of the tab 13 is flattened first, and then the inner-ring region of the tab 13 is flattened; or the like.

Moreover, the preparation method of battery cell may further include the following steps: welding an end cover assembly 14 to the flattened first flattened portion 131; arranging a first insulating member 16 on an outer periphery of the second flattened portion 132; inserting the electrode assembly 12 into a housing 11, and covering the housing 11 with the end cover assembly 14 so that the second insulating member 142 of the end cover assembly 14 abuts against the first insulating member 16.

In the above preparation method of battery cell, the tab 13 is flattened to different depths so that the first flattened portion 131 and the second flattened portion 132 with a depth difference are formed on the tab 13. When the prepared electrode assembly 12 is packaged in the housing 11, the second flattened portion 132 close to an inner wall of the housing 11 is at a lower position. In this case, even if the second flattened portion 132 lifts up due to accumulation of internal elastic force, it cannot cross the top of the first insulating member 16 to lap over the inner wall of the housing 11. This effectively reduces the risk of electrochemical corrosion caused by the tab 13 lapping over the housing 11, thereby reducing the phenomenon of electrolyte leakage in the battery cell 10 and improving reliability.

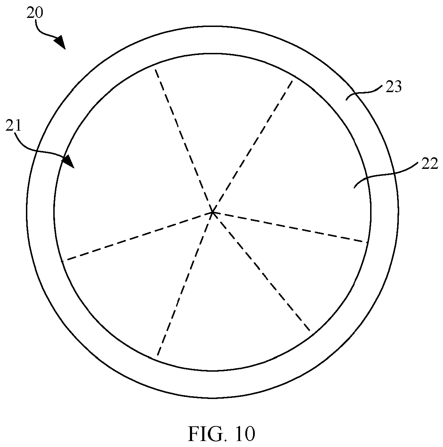

According to some embodiments of this application, referring to FIG. 10, this application provides a preparation apparatus of battery cell. The preparation apparatus of battery cell includes: a driving mechanism and a flattening wheel 20. The flattening wheel 20 is driven by the driving mechanism and rotates around its own axis. The flattening wheel 20 includes a wheel body 21 and a flattening protrusion 23, the flattening protrusion 23 is disposed on a flattening surface 22 of the wheel body 21 and extends circumferentially around the wheel body 21.

The driving mechanism is a component that provides power for rotation of the flattening wheel 20. For example, the driving mechanism may be a motor; or the driving mechanism may be a combined structure of a motor and a transmission mechanism. The transmission mechanism may be but is not limited to a gear set, a combined structure of roller and belt, a combined structure of gear and chain, or the like.

The flattening wheel 20 is a component capable of applying flattening force to the end surface of the tab 13; and the flattening protrusion 23 is a protrusion disposed on the flattening surface 22 of the wheel body 21. In this way, during the flattening process, the flattening protrusion 23 and the wheel body 21 create flattened regions of different depths on the tab 13. In addition, the flattening protrusion 23 extends around the wheel body 21 and can be of a closed or non-closed annular structure.

Optionally, the flattening protrusion 23 and the wheel body 21 can be connected by, without limitation to, bolting, snap-fit, welding, bonding, integral molding, or the like. The integral molding may be but is not limited to extrusion, injection molding, die casting, or the like.

In the above preparation apparatus of battery cell, the annular flattening protrusion 23 is designed on the flattening surface 22 of the wheel body 21. During the flattening process, the flattening protrusion 23 first acts on the tab 13; and after flattening to a certain depth, the flattening surface 22 then comes into contact with the inner-ring region of the tab 13 and flattens it. In this way, the first flattened portion 131 and the second flattened portion 132 with a depth difference can be formed on the tab 13 by using the flattening wheel 20. When the prepared electrode assembly 12 is packaged in the housing 11, the second flattened portion 132 close to an inner wall of the housing 11 is at a lower position. In this case, even if the second flattened portion 132 lifts up due to accumulation of internal elastic force, it cannot cross a circumferential structure of the tab 13, such as the top of a first insulating member 16, to lap over the inner wall of the housing 11. This effectively reduces the risk of electrochemical corrosion caused by the tab 13 lapping over the housing 11, thereby reducing the phenomenon of electrolyte leakage in the battery cell 10 and improving reliability.

According to some embodiments of this application, referring to FIG. 4 to FIG. 10, this application provides an electrode assembly 12. Stepped flattening is performed on a tab 13 of the electrode assembly 12, where a flattening depth of the tab 13 within a width range of 1 mm to 5 mm from the edge is relatively deep, and a flattening depth of the inner ring is relatively shallow; and a first insulating member 16 is attached to the outer ring of the tab 13. In this way, even if the second flattened portion 132 on the outer ring lifts up, it requires a longer length to cross the top of the first insulating member 16 to lap over the housing 11. The first flattened portion 131 on the inner ring is less likely to lap over the housing 11 because it is far away from the first insulating member 16. Moreover, the compactness of the second flattened portion 132 on the outer ring is higher than that of the first flattened portion 131 on the inner ring, making it even less likely for the tab 13 to lift vertically.

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. They should all be covered in the scope of the claims and specification of this application. In particular, as long as there is no structural conflict, the various technical features mentioned in the implementations can be combined in any manners. This application is not limited to the specific embodiments disclosed in this specification but includes all technical solutions falling within the scope of the claims.

**Claims**

1. A battery cell (10), comprising an electrode assembly (12), wherein the electrode assembly (12) comprises:

   a main body portion (121); and
   a tab (13) disposed on at least one end of the main body portion (121) along a predetermined direction (X) of the electrode assembly (12); wherein the tab (13) comprises a first flattened portion (131) and a second flattened portion (132), the second flattened portion (132) surrounds an outer periphery of the first flattened portion (131), and along the predetermined direction (X), the first flattened portion (131) protrudes from the second flattened portion (132).

2. The battery cell (10) according to claim 1, wherein a compactness of the first flattened portion (131) is denoted as Q1, a compactness of the second flattened portion (132) is denoted as Q2, and Q1 and Q2 meet the following condition: Q2 > Q1.

3. The battery cell (10) according to claim 2, wherein Q1 and Q2 further meet the following condition: 105% ≤ Q2/Q1 ≤ 140%; and
   optionally, Q1/Q2 further meets the following condition: 105% ≤ Q2/Q1 ≤ 130%.

4. The battery cell (10) according to any one of claims 1 to 3, wherein along the predetermined direction (X), a height by which the first flattened portion (131) protrudes from the second flattened portion (132) is denoted as h1, and 1 mm ≤ h1 ≤ 4 mm; and
   optionally, h1 further meets the following condition: 1 mm ≤ h1 ≤ 2.5 mm.

5. The battery cell (10) according to any one of claims 1 to 4, wherein the second flattened portion (132) comprises an inner edge (13a) adjacent to the first flattened portion (131) and an outer edge (13b) surrounding the inner edge (13a), and a distance between the inner edge (13a) and the outer edge (13b) is denoted as L, wherein 1 mm ≤ L ≤ 5 mm; and optionally, L further meets the following condition: 1 mm ≤ L ≤ 3 mm.

6. The battery cell (10) according to any one of claims 1 to 5, wherein the second flattened portion (132) comprises an inner edge (13a) adjacent to the first flattened portion (131) and an outer edge (13b) surrounding the inner edge (13a), and a distance between the inner edge (13a) and the outer edge (13b) is denoted as L; and along the predetermined direction (X), a height by which the first flattened portion (131) protrudes from the second flattened portion (132) is denoted as h1, and L and h1 further meet the following condition: L > h1.

7. The battery cell (10) according to any one of claims 1 to 6, wherein the electrode assembly (12) is constructed as a cylindrical structure; and along a radial direction (Z) of the electrode assembly (12), an outer diameter of the electrode assembly (12) at the main body portion (121) is denoted as Y, half of a difference between an outer diameter and an inner diameter of the second flattened portion (132) is denoted as L, and Y and L meet the following condition:
   $$\frac{4Y-96}{49} \leq L \leq \frac{5Y-80}{26}.$$

8. The battery cell (10) according to any one of claims 1 to 7, wherein the electrode assembly (12) comprises a separator (17), and along the predetermined direction (X), the first flattened portion (131) and the second flattened portion (132) both protrude from the separator (17).

9. The battery cell (10) according to any one of claims 1 to 8, wherein the battery cell (10) further comprises:

   a housing (11) having an opening (111), wherein the electrode assembly (12) is accommodated inside the housing (11), and the tab (13) is disposed facing the corresponding opening (111); and
   a first insulating member (16) disposed inside the housing (11), surrounding an outer periphery of the second flattened portion (132) and protruding from the second flattened portion (132) along the predetermined direction (X).

10. The battery cell (10) according to claim 9, wherein along the predetermined direction (X), a height by which the first insulating member (16) protrudes from the second flattened portion (132) is denoted as h2, and 7 mm ≤ h2 ≤ 15 mm; and
    optionally, h2 further meets the following condition: 10 mm ≤ h2 ≤ 15 mm.

11. The battery cell (10) according to claim 9 or 10, wherein the first insulating member (16) protrudes from the first flattened portion (131) along the predetermined direction (X).

12. The battery cell (10) according to any one of claims 9 to 11, wherein the battery cell (10) further comprises an end cover assembly (14) disposed covering the opening (111), wherein the first insulating member (16) is in contact with the end cover assembly (14).

13. The battery cell (10) according to claim 12, wherein the end cover assembly (14) comprises an end cover (141) and a second insulating member (142), wherein the end cover (141) is disposed covering the opening (111), the second insulating member (142) is disposed on a side of the end cover (141) facing the electrode assembly (12), and the first insulating member (16) surrounds at least part of an outer periphery of the second insulating member (142) and is in contact with the second insulating member (142).

14. The battery cell (10) according to claim 13, wherein at least part of the second insulating member (142) surrounds the outer periphery of the first flattened portion (131).

15. The battery cell (10) according to claim 13 or 14, wherein the first insulating member (16) is bonded to a circumferential side surface of the second insulating member (142).

16. The battery cell (10) according to any one of claims 13 to 15, wherein the end cover assembly (14) comprises an electrode terminal (143), and the second insulating member (142) comprises a body portion (14a) and an extension portion (14b) connected to each other, wherein the body portion (14a) is disposed between the end cover (141) and the electrode terminal (143), and the extension portion (14b) extends from the body portion (14a) towards the electrode assembly (12) and surrounds the outer periphery of the first flattened portion (131).

17. A battery (100), comprising the battery cell (10) according to any one of claims 1 to 16.

18. An electric apparatus, comprising the battery (100) according to claim 17, wherein the battery (100) is configured to provide electric energy.

19. A preparation method of battery cell, comprising the following steps:

    providing an electrode assembly (12); and
    flattening a tab (13) of the electrode assembly (12) to different depths to form a first flattened portion (131) and a second flattened portion (132) surrounding the first flattened portion (131), wherein along a predetermined direction (X) of the electrode assembly (12), the first flattened portion (131) protrudes from the second flattened portion (132).

20. A preparation apparatus of battery cell, comprising:

    a driving mechanism; and
    a flattening wheel (20) driven by the driving mechanism and rotating around its own axis; wherein the flattening wheel (20) comprises a wheel body (21) and a flattening protrusion (23), and the flattening protrusion (23) is disposed on a flattening surface (22) of the wheel body (21) and extends circumferentially around the wheel body (21).

FIG. 1

400

40b

40a

401

10

40c

FIG. 2

FIG. 3

FIG. 4

FIG. 5

EP 4 621 979 A1

FIG. 6

FIG. 7

21

FIG. 8

Provide an electrode assembly S100

Flatten a tab of the electrode assembly to different depths to form a first flattened portion and a second flattened portion surrounding the first flattened portion, where along a predetermined direction of the electrode assembly, the first flattened portion protrudes from the second flattened portion S200

FIG. 9

FIG. 10

## INTERNATIONAL SEARCH REPORT

| International application No. |
|---|
| **PCT/CN2022/141246** |

**A.    CLASSIFICATION OF SUBJECT MATTER**

H01M50/533(2021.01)i;  H01M50/531(2021.01)i;  H01M10/04(2006.01)i

According to International Patent Classification (IPC) or to both national classification and IPC

**B.    FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 极耳, 翘曲, 边缘, 台阶, 凸台, 外围, 外周, 围绕, tab, warping, step, project+, periphery, edge

**C.    DOCUMENTS CONSIDERED TO BE RELEVANT**

| Category* | Citation of document, with indication, where appropriate, of the relevant passages | Relevant to claim No. |
|---|---|---|
| X | CN 112310574 A (NINGDE CONTEMPORARY AMPEREX TECHNOLOGY CO., LTD.) 02 February 2021 (2021-02-02)<br>    description, paragraphs 51-92, and figures 5-14 | 1-20 |
| X | CN 210743995 U (NINGDE CONTEMPORARY AMPEREX TECHNOLOGY CO., LTD.) 12 June 2020 (2020-06-12)<br>    description, paragraphs 87-131, and figures 1-10 | 1-20 |
| X | CN 214625324 U (HEFEI GUOXUAN HIGH-TECH POWER ENERGY CO., LTD.) 05 November 2021 (2021-11-05)<br>    description, paragraphs 4-28, and figures 1-6 | 1-20 |
| A | CN 115101899 A (ZHAOQING XIAOPENG AUTOMOBILE CO., LTD.) 23 September 2022 (2022-09-23)<br>    entire document | 1-20 |
| A | CN 217086821 U (ENVISION POWER TECHNOLOGY (JIANGSU) CO., LTD. et al.) 29 July 2022 (2022-07-29)<br>    entire document | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 August 2023** | **04 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 621 979 A1**

INTERNATIONAL SEARCH REPORT
Information on patent family members

International application No.

**PCT/CN2022/141246**

| Patent document cited in search report | | | Publication date (day/month/year) | Patent family member(s) | | | Publication date (day/month/year) |
|---|---|---|---|---|---|---|---|
| CN | 112310574 | A | 02 February 2021 | WO | 2022068449 | A1 | 07 April 2022 |
| | | | | AU | 2021354279 | A1 | 22 September 2022 |
| | | | | KR | 20220131318 | A | 27 September 2022 |
| | | | | EP | 4135118 | A1 | 15 February 2023 |
| | | | | JP | 2023515610 | W | 13 April 2023 |
| CN | 210743995 | U | 12 June 2020 | None | | | |
| CN | 214625324 | U | 05 November 2021 | None | | | |
| CN | 115101899 | A | 23 September 2022 | None | | | |
| CN | 217086821 | U | 29 July 2022 | None | | | |

Form PCT/ISA/210 (patent family annex) (July 2022)